# EUROPÄISCHE PATENTANMELDUNG

(11) **EP 2 353 696 A1**
(43) Veröffentlichungstag der Anmeldung: **10.08.2011**
(21) Anmeldenummer: 11000791.1
(22) Anmeldetag: 01.02.2011
(51) Int. Cl.: B01D 53/04

(54) **Adsorberstation**

(30) Priorität: 04.02.2010 DE 102010006871
(71) Anmelder: Linde AG, 80331 München (DE)
(72) Erfinder: Bahner, Valdo, 81377 München (DE)
(74) Vertreter: Zahn, Christoph

(57) **Zusammenfassung**

Es wird eine Adsorberstation beschrieben, aufweisend
- zwei parallel zueinander angeordnete Adsorber, die abwechselnd Adsorptions- und Regenerierphasen durchlaufen,
- Zuführleitungen, über die den Adsorbern während der Adsorptionsphase das adsorptiv zu behandelnde Gasgemisch (Einsatzgas) zugeführt wird, und
- Abführleitungen, über die das adsorptiv behandelte Gasgemisch (Produktgas) während der Adsorptionsphase aus den Adsorbern abgezogen wird.

Erfindungsgemäß
- sind die Zuführleitungen aus einer sich in zwei Zweigleitungen (1 a, 1 b) teilenden Zuführleitung (1), an deren Verzweigepunkt eine Dreiwegeklappe (DW1) angeordnet ist, und/oder
- die Abführleitungen aus zwei Zweigleitungen (2a, 2b), die sich zu einer Abführleitung (2) vereinigen, wobei am Vereinigungspunkt eine Dreiwegeklappe (DW2) angeordnet ist, gebildet.

## Beschreibung

Die Erfindung betrifft eine Adsorberstation, aufweisend
- zwei parallel zueinander angeordnete Adsorber, die abwechselnd Adsorptions- und Regenerierphasen durchlaufen,
- Zuführleitungen, über die den Adsorbern während der Adsorptionsphase das adsorptiv zu behandelnde Gasgemisch (Einsatzgas) zugeführt wird, und
- Abführleitungen, über die das adsorptiv behandelte Gasgemisch (Produktgas) während der Adsorptionsphase aus den Adsorbern abgezogen wird.

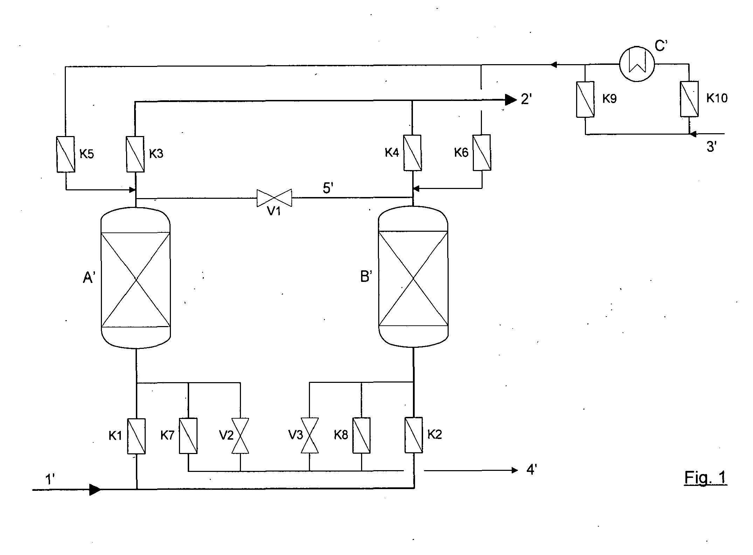

Eine gattungsgemäße Adsorberstation sei nachfolgend anhand der in der **Figur 1** dargestellten Adsorberstation erläutert.

Diese Adsorberstation weist zwei parallel zueinander angeordnete Adsorber A' und B' auf. Gattungsgemäße Adsorberstationen werden beispielsweise zur Entfernung von Wasser, Kohlendioxid und/oder Kohlenwasserstoffen aus Luft, die anschließend beispielsweise einer Tieftemperaturzerlegung unterworfen wird, verwendet.

Der verdichtete Luftstrom - die Verdichtung des Luftstroms ist in der Figur 1 nicht dargestellt - wird üblicherweise mit einem Druck von ca. 4,8 bis 5,5.bara und einer Temperatur von 8 bis 17 °C demjenigen Adsorber, der sich in der Adsorptionsphase befindet, zugeführt. Befindet sich der Adsorber A' in der Adsorptionsphase, wird ihm der Luftstrom über die Leitung 1' bei geöffneter Klappe K1 zugeführt (Anm.: Die nachfolgend nicht erwähnten Klappen und Ventile sind geschlossen). Nach Durchgang durch den Adsorber A' wird der Luftstrom über die Leitung 2' bei geöffneter Klappe K3 abgeführt. Aufgrund der Adsorptionswärme weist der über die Leitung 2' abgezogene Luftstrom eine gegenüber der Eintrittstemperatur um etwa 7 K höhere Austrittstemperatur auf.

Während sich der Adsorber A' in der Adsorptionsphase befindet, wird der Adsorber B' einer Regenerierung unterworfen. Dazu wird über Leitung 3' ein Regeneriergasstrom herangeführt, bei dem es sich beispielsweise um ein Stickstoff-reiches, aus der Tieftemperaturzerlegung stammendes trockenes Gasgemisch handelt. Über die geöffneten Klappen K9 und/oder K10 sowie K6 und K8 wird der Regeneriergasstrom durch den Adsorber B' geführt und anschließend über Leitung 4' abgezogen.

Üblicherweise weist die Regenerierphase eine sog. Ausheizphase auf; deren Dauer beträgt ca. 1/3 der Dauer der Regenerierphase. Während dieser Ausheizphase wird der Regeneriergasstrom bei geöffneter Klappe K10 - die Klappe K9 ist in diesem Fall geschlossen - über den Erhitzer bzw. die Heizvorrichtung C' geführt und auf eine Temperatur von ca. 180 °C erhitzt. Während der restlichen Zeit der Regenerierphase liegt die Temperatur des Regeneriergases üblicherweise wenige Grad unterhalb der Austrittstemperatur des Luftstromes.

Die Adsorberbehälter A' und B' werden zyklisch umgeschaltet, vorzugsweise etwa alle vier Stunden, wobei die Zeitdauer vom Füllvolumen bestimmt wird, ohne dass dabei jedoch die Zufuhr des über die Leitung 1 herangeführten Luftstromes unterbrochen werden muss. Befindet sich der Adsorber B' in der Adsorptionsphase, wird der Luftstrom bei geöffneten Klappen K2 und K4 durch ihn hindurchgeleitet und anschließend über die Leitung 2' abgezogen. Dem in der Regenerierphase befindlichen Adsorber A' wird bei geöffneten Klappen K9 und/oder K10 sowie K5 und K7 Regeneriergas zugeführt und anschließend über die Leitung 4' abgezogen.

Die in der Figur 1 dargestellte Leitung 5' sowie das in ihr angeordnete Druckaufbauventil V1 dienen dem Druckaufbau der beiden Adsorber A' und B' zu Beginn deren Adsorptionsphase. Dargestellt sind des Weiteren zwei Druckabbauventile V2 und V3, die dem Druckabbau in den Adsorbern dienen.

Wie aus der Figur 1 ersichtlich, weist die vorbeschriebene gattungsgemäße Adsorberstation 13 Armaturen auf, nämlich zehn Klappen sowie drei Ventile.

Aufgabe der vorliegenden Erfindung ist es, eine gattungsgemäße Adsorberstation anzugeben, bei der die Zahl der Armaturen reduziert ist.

Zur Lösung dieser Aufgabe wird eine Adsorberstation vorgeschlagen, die dadurch gekennzeichnet ist, dass
- die Zuführleitungen aus einer sich in zwei Zweigleitungen teilenden Zuführleitung, an deren Verzweigepunkt eine Dreiwegeklappe angeordnet ist, und/oder
- die Abführleitungen aus zwei Zweigleitungen, die sich zu einer Abführleitung vereinigen, wobei am Vereinigungspunkt eine Dreiwegeklappe angeordnet ist, gebildet sind.

Unter dem Begriff "Klappe" seien hierbei auch andere Armaturen, bspw. Ventile, insbesondere Kugelhahnventile, zu verstehen, die eine zumindest annähernd identische Wirkung bzw. Funktion wie eine Klappe ermöglichen.

Eine vorteilhafte Ausgestaltung der Adsorberstation, die Zu- und Abführleitungen, über die einem in der Regenerierphase befindlichen Adsorber Regeneriergas zu- bzw. abgeführt wird, aufweist, ist dadurch gekennzeichnet, dass
- die Regeneriergas-Zuführleitungen aus einer sich in zwei Zweigleitungen teilenden Regeneriergas-Zuführleitung, an deren Verzweigepunkt eine Dreiwegeklappe angeordnet ist, und/oder
- die Regeneriergas-Abführleitungen aus zwei Zweigleitungen, die sich zu einer Regeneriergas-Abführleitung vereinigen, wobei am Vereinigungspunkt eine Dreiwegeklappe angeordnet ist, gebildet sind.

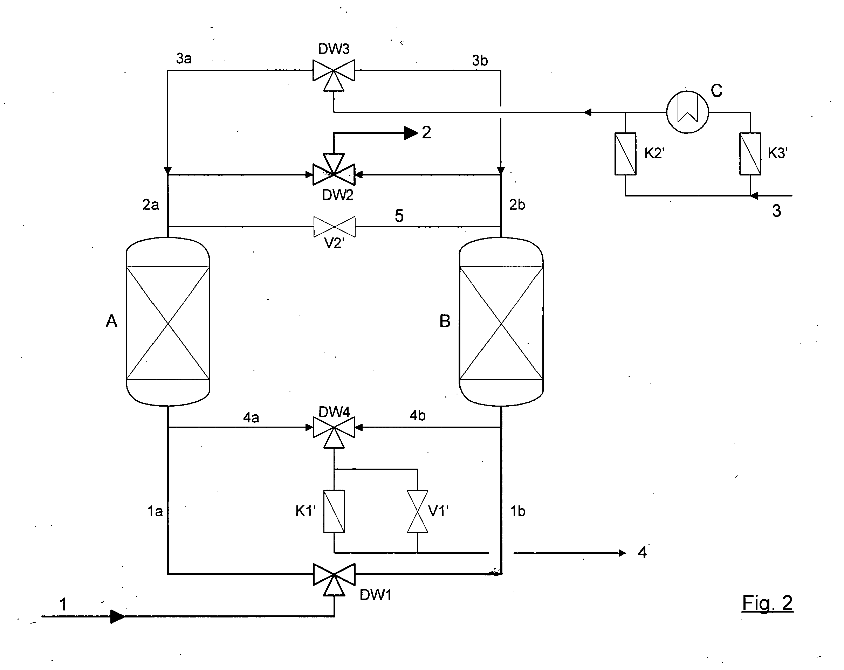

Die erfindungsgemäße Adsorberstation sowie weitere Ausgestaltungen derselben seien nachfolgend anhand des in der Figur 2 dargestellten Ausführungsbeispiels näher erläutert.

Im Gegensatz zu der anhand der Figur 1 beschriebenen Adsorberstation sind nunmehr die Luftein- und -austrittsklappen durch Dreiwegeventile ersetzt. Befindet sich der Adsorber A nunmehr in der Adsorptionsphase, wird das Dreiwegeventil DW1 derart geschaltet, dass der Luftstrom über die Leitungsabschnitte 1 und 1 a dem Adsorber A zugeführt wird; der Leitungsabschnitt 1 b wird in diesem Fall durch das Dreiwegeventil DW1 geschlossen.

Entsprechend wird das Dreiwegeventil DW2 so geschaltet, dass der aus dem Adsorber A abgezogene Luftstrom über die Leitungsabschnitte 2a und 2 abgezogen und beispielsweise einer nachgeschalteten Tieftemperaturzerlegungseinheit zugeführt werden kann. Befindet sich hingegen der Adsorber B in der Adsorptionsphase, so werden die Dreiwegeventile DW1 und DW2 so geschaltet, dass der zu behandelnde Luftstrom über die Leitungsabschnitte 1, 1 b, 2b und 2 durch den Adsorber B geführt wird.

Analog hierzu erfolgt eine Verteilung des Regeneriergasstromes, der über die Leitung 3 herangeführt und über die Klappen K2' und/oder K3' an dem Erhitzer bzw. der Heizvorrichtung C vorbei bzw. durch den Erhitzer bzw. die Heizvorrichtung C geführt wird. Über die Stellung der Dreiwegeventile DW3 und DW4 kann der Regeneriergasstrom entweder über die Leitungsabschnitte 3a und 4a durch den Adsorber A oder über die Leitungsabschnitte 3b und 4b durch den Adsorber B geführt werden.

Die Leitung 5 sowie das darin angeordnete Ventil V2' dienen dem Druckaufbau der Adsorber A und B, während über das Ventil V1' ein Druckabbau in den Adsorbern A und B realisiert werden kann.

Im Gegensatz zu der anhand der in der Figur 1 beschriebenen Adsorberstation weist die erfindungsgemäße Adsorberstation nunmehr lediglich neun Armaturen (vier Dreiwegeventile DW1 bis DW4, drei Klappen K1' bis K3' sowie zwei Ventile V1' und V2') auf.

Die erfindungsgemäße Adsorberstation ermöglicht zum einen eine Kostenersparnis aufgrund der Reduzierung der Armaturen sowie aufgrund einer einfacheren Verrohrung, da insbesondere die bisher vorzusehende Ringleitung am Ein- und Austritt der Adsorber entfallen kann.

Des Weiteren wird die Steuerung des in der erfindungsgemäßen Adsorberstation realisierten Adsorptionsprozesses vereinfacht. Darüber hinaus verringert sich der Wartungsaufwand der erfindungsgemäßen Adsorberstation und es lassen sich Einsparungen bei der Ersatzteilhaltung realisieren.

Es sei betont, dass die vorbeschriebene erfindungsgemäße Adsorberstation nicht nur für die adsorptive Abtrennung von Wasser, Kohlendioxid und/oder Kohlenwasserstoffen aus Luft geeignet ist, sondern für jede adsorptive Auftrennung eines Gasgemisches.

## Patentansprüche

1. Adsorberstation, aufweisend
- zwei parallel zueinander angeordnete Adsorber, die abwechselnd Adsorptions- und Regenerierphasen durchlaufen,
- Zuführleitungen, über die den Adsorbern während der Adsorptionsphase das adsorptiv zu behandelnde Gasgemisch (Einsatzgas) zugeführt wird, und
- Abführleitungen, über die das adsorptiv behandelte Gasgemisch (Produktgas) während der Adsorptionsphase aus den Adsorbern abgezogen wird,
**dadurch gekennzeichnet, dass**
- die Zuführleitungen aus einer sich in zwei Zweigleitungen (1 a, 1 b) teilenden Zuführleitung (1), an deren Verzweigepunkt eine Dreiwegeklappe (DW1) angeordnet ist, und/oder
- die Abführleitungen aus zwei Zweigleitungen (2a, 2b), die sich zu einer Abführleitung (2) vereinigen, wobei am Vereinigungspunkt eine Dreiwegeklappe (DW2) angeordnet ist, gebildet sind.

2. Adsorberstation nach Anspruch 1, aufweisend Zu- und Abführleitungen, über die einem in der Regenerierphase befindlichen Adsorber Regeneriergas zu- bzw. abgeführt wird, **dadurch gekennzeichnet, dass**
- die Regeneriergas-Zuführleitungen aus einer sich in zwei Zweigleitungen (3a, 3b) teilenden Regeneriergas-Zuführleitung (3), an deren Verzweigepunkt eine Dreiwegeklappe (DW3) angeordnet ist, und/oder
- die Regeneriergas-Abführleitungen aus zwei Zweigleitungen (4a, 4b), die sich zu einer Regeneriergas-Abführleitung (4) vereinigen, wobei am Vereinigungspunkt eine Dreiwegeklappe (DW4) angeordnet ist, gebildet sind.
